# EUROPÄISCHE PATENTSCHRIFT

(11) **EP 3 916 449 B1**
(45) Veröffentlichungstag und Bekanntmachung des Hinweises auf die Patenterteilung: **04.10.2023**
(21) Anmeldenummer: 20177459.3
(22) Anmeldetag: 29.05.2020
(51) Int. Cl.: G02B 6/44

(54) **SPLEISSMODULSTAPEL MIT VERBESSERTER KABELFÜHRUNG**
SPLICE MODULE STACK WITH IMPROVED CABLE GUIDE
EMPILEMENT DE MODULES D'ÉPISSURE À GUIDAGE DE CÂBLE AMÉLIORÉ

(43) Veröffentlichungstag der Anmeldung: 01.12.2021
(73) Patentinhaber: Hauff-Technik GRIDCOM GmbH, 73494 Rosenberg (DE)
(72) Erfinder: Hammer, Ralf, 73489 Jagstzell (DE)
(74) Vertreter: König Szynka Tilmann von Renesse Patentanwälte Partnerschaft mbB München

(56) Entgegenhaltungen:
- EP-A1- 2 725 397
- WO-A2-2016/042018
- US-A- 5 946 440
- US-A1- 2009 067 802
- US-A1- 2009 148 117

## Beschreibung

Die Erfindung betrifft einen Stapel von Spleißmodulen für Lichtwellenleiterkabel ("LWL-Kabel"). Solche Lichtwellenleiterkabel sind auch als Glasfaserkabel bekannt.

LWL-Kabel dienen zur Signalübertragung mit hohen Übertragungsraten und/oder hoher räumlicher Reichweite und finden immer stärkeren Einsatz. Insbesondere werden zunehmend die LWL-Kabelnetze bis zum Verbraucher verlegt oder sogar bis zum Endgerät im Haushalt oder Büro. Mit dem Ausbau der LWL-Kabelnetze stellt sich immer häufiger die Aufgabe der Verbindung von LWL-Kabeln untereinander.

Dabei werden die einzelnen Fasern mit einer an sich bekannten Technologie aneinandergefügt und diese sogenannten Spleiß- und Patchstellen in ebenfalls an sich bekannter Weise geordnet sowie zugänglich und geschützt untergebracht. Man spricht von Spleißmodulen, in denen typischerweise eine Mehrzahl (z. B. zwölf oder eine Vielzahl von zwölf) Glasfasern in Kabeln mit jeweils einer einzelnen Glasfaser in jeweiligen Spleißkassetten gespleißt sind und mit kurzen Anschlusskabeln (Pigtails) auf Abschlusselemente (etwa Stecker und Kupplungen) geführt werden. Dort können dann zur Weiterführung der Glasfaserverbindungen LWL-Kabel mit Verbindungselementen (etwa Steckern), insbesondere Patchkabel, eingesetzt werden. Im Folgenden bezieht sich der Begriff des LWL-Kabels also auf einen Kabeltyp im Bereich eines solchen Spleißmoduls und nicht auf ein bspw. unter einer Straße vergrabenes "Glasfaserkabel" mit einem dicken und vielfältigen Bündel einzelner Fasern.

Zur Zugänglichkeit zu den einzelnen Spleiß- und Patchstellen verfügen bekannte Spleißmodule typischerweise über einen bewegten schubladenähnlichen Auszug und eine ortsfeste Halterung. Bei besonderen Varianten ist der Ausdruck nicht translatorisch auszuziehen, sondern um eine Schwenkachse, typischerweise in der Nähe der Ecke der Halterung, aufschwenkbar. Im Folgenden wird diesbezüglich von einem Schwenkmodul gesprochen (also quasi einer Drehlade anstelle einer Schublade). Beispielhaft kann verwiesen werden auf die EP 2 221 650 A1.

Die translatorischen Schubladenbewegungen führen zu Bewegungen der sogenannten Patchkabel, die an die Verbindungselemente der Anschlussfasern angeschlossen sind. Solche Bewegungen können zu unerwünschten Zugbelastungen oder Biegebelastungen einzelner LWL-Kabel (Patchkabel) führen. Dabei ist insbesondere zu berücksichtigen, dass die LWL-Kabel zur Vermeidung unerwünschter Dämpfung bestimmte Biegeradien nicht unterschreiten sollen. Dementsprechend sind im Stand der Technik z. B. bereits Führungskonstruktionen bekannt, in denen die betroffenen Patchkabel beim translatorischen Ausziehen oder Hineinschieben einer Schublade von Elementen gestützt werden, die z. B. mit der halben Geschwindigkeit der Schublade, also übersetzt, mitbewegt werden.

Ferner wird verwiesen auf die EP 3 511 753 A1, die sich mit einer verbesserten Lösung für Schwenkmodule befasst. Dabei werden LWL-Kabel von einer Führung, die im Wesentlichen den Kabelverlauf im schwenkachsennächsten Bereich an den Schwenkmodulen bestimmt, in eine S-Form gebracht. Schädliche Auswirkungen der Schwenkbewegungen der Schwenkmodule auf weiter entfernt liegende Kabelbereiche werden insoweit reduziert.

Die WO 2016/042018 A2 zeigt Ablagemodule mit je einer Ablage zur Montage innerhalb eines Gehäuses 10 über einen jeweiligen eigenen Stützarm. Das liegt dem Oberbegriff des Anspruchs 1 zugrunde.

Die US 2009/067802 A1 zeigt einen Spleißmodulstapel mit Kassetten als Ablage für Lichtwellenleiterkabel, wobei die jeweiligen Kassetten eine Nut aufweisen, womit sie an einer Achse einer Aufnahme angebracht werden können. Die Kassette wird an der Achse mittels einer Rändelschraube fixiert.

Die EP 2 725 397 A1 zeigt Ablageeinheiten für LWL-Kabel mit je zwei jeweils senkrecht zueinander stehenden Segmenten. Eine Ablage ist drehbeweglich über ein Drehgelenk an einem freien Ende des zweiten Segmentes gelagert.

Auf der Grundlage des geschilderten Standes der Technik liegt der vorliegenden Erfindung die Aufgabe zugrunde, eine hinsichtlich der mechanischen Belastung der LWL-Kabel bei schwenkbaren Spleißmodulen weiter verbesserte Lösung anzugeben.

Diese Aufgabe wird gelöst durch den Gegenstand des Anspruchs 1 und in verbesserter Ausgestaltung durch die verschiedenen abhängigen Ansprüche.

Zunächst geht die Erfindung von einer ganz analogen Situation aus wie in dem zitierten Stand der Technik EP 3 511 753 A1, insbesondere von einem Stapel aus einer Mehrzahl LWL-Spleißmodule, die jeweils Spleißstellenablagen aufweisen und entlang der geometrischen Schwenkachse gestapelt sind. Die geometrische Schwenkachse ist dabei die abstrakte (also mathematische) Achse der für die jeweiligen schwenkbaren Spleißmodule implementierten Beweglichkeit. Diese Implementierung ist in dem zitierten Stand der Technik durch einen die jeweiligen Spleißmodule durchsetzenden Achsstab realisiert (und zwar bei dem Bezugszeichen A in den Figuren), der durch die Module eines Stapels vollständig und einstückig hindurchgreift. (Im Folgenden wird verallgemeinernd von einem Schwenkachsenkörper gesprochen, der im zitierten Beispiel der genannte Stab ist.) Die einzelnen Spleißmodule haben jeweilige angepasste Öffnungen und diese Öffnungen bilden zusammen mit dem Stab Schwenkgelenke.

Diese Ausführung ist einfach und (abgesehen von der Kabelführung) grundsätzlich auch über das zitierte Dokument hinaus gängig. Insbesondere hat sie den großen Vorteil einer relativ guten Stabilität infolge der über die Bauhöhe jedes einzelnen Spleißmoduls hinaus verlängerten einstückigen Ausführung des Stabes.

Die vorliegende Erfindung, die in Anspruch 1 definiert ist, geht jedoch einen anderen Weg und schafft jeweils für jedes der gestapelten Spleißmodule Freiräume direkt an der geometrischen Schwenkachse, die in dem zitierten Dokument durch den Schwenkachsenkörper (Stab) versperrt ist. Der Schwenkachsenkörper lässt also diese Freiräume aus, und zwar jeweils mindestens (und vorzugsweise genau) einen pro Spleißmodul, sodass (zumindest) ein LWL-Kabel durch die geometrische Schwenkachse hindurchtreten kann, diese also nicht für den Kabeldurchtritt versperrt ist. Dementsprechend ist im Unterschied zu der in dem zitierten Dokument dargestellten Lösung eine Kabelführung unmittelbar durch die geometrische Schwenkachse oder jedenfalls in direkter Nähe dazu möglich. Bei einer üblicherweise größeren Zahl von LWL-Kabeln pro Spleißmodul ist nämlich das jeweilige Kabelbündel typischerweise etwas zu dick, um tatsächlich alle LWL-Kabel direkt durch die geometrische Achse hindurchtreten zu lassen. In jedem Fall kann der "radiale" Abstand zwischen den LWL-Kabeln und der geometrischen Schwenkachse verkleinert oder vermieden werden.

Dementsprechend wirken sich die Schwenkbewegungen der Spleißmodule in einem viel geringeren Maß auf die LWL-Kabel aus. Konkret skaliert nämlich die Bewegungskomponente entlang der Kabelrichtung im Wesentlichen mit dem radialen Abstand von der Schwenkachse. Die natürlich infolge der Schwenkbewegungen auftretenden Winkeländerungen wiederum können von den grundsätzlich flexiblen LWL-Kabeln weitgehend aufgefangen werden.

Die erfindungsgemäßen Freiräume entlang der geometrischen Schwenkachse optimieren also die LWL-Kabelanordnung hinsichtlich der auf die Kabel übertragenen Bewegungen.

Vorzugsweise sind auch im Rahmen der vorliegenden Erfindung Führungen für die Kabel in dem Bereich um die geometrische Schwenkachse herum vorgesehen, also ähnlich wie in dem zuletzt besprochenen Dokument aus dem Stand der Technik. Solche Führungen sind aber, soweit eine mindestens sehr schwenkachsennahe Anordnung gewährleistet ist, nicht unbedingt notwendig. Die Führungen sollen jedenfalls die Möglichkeit eines Durchsetzens der geometrischen Schwenkachse durch zumindest ein LWL-Kabel gewährleisten, wobei z. B. beidseits von der geometrischen Schwenkachse (beidseits in einer Richtung senkrecht dazu) jeweils eine Führungswand vorgesehen sein kann.

Die Verschwenkbarkeit der Spleißmodule betrifft, wie schon im Stand der Technik, vorzugsweise die Bewegung zwischen einer Schließposition und einer geöffneten Position. In der Schließposition sorgt ein benachbartes Element (benachbart im Sinn einer zu der geometrischen Schwenkachse parallelen Richtung) für eine Abdeckung der jeweiligen Spleißstellenablage zu zumindest einer Seite, vorzugsweise natürlich der den Zugang zu den Spleißstellenablagen ermöglichenden Seite. Dieses benachbarte Element kann ein benachbartes Spleißmodul sein, das seinerseits weitgehend geschlossen und plattenförmig und damit abdeckend ausgeführt sein kann. Es kann sich auch um die Abdeckung am Ende eines Stapels handeln, etwa ein Gehäuseteil eines den Spleißmodulstapel schützenden Gehäuses. Die geöffnete Position wiederum ist eine Position, in der der genannte Zugang zu der Spleißstellenablage erlaubt ist, jedenfalls wenn ein zu der entsprechenden Seite benachbartes Spleißmodul nicht ebenfalls in der geöffneten Position angeordnet ist.

Es gibt zwei bevorzugte Varianten der Realisierung der bereits erläuterten Freiräume entlang der geometrischen Schwenkachse. Die erste Variante, die nicht Teil der beanspruchten Erfindung ist, sieht gewissermaßen vor, dass der Schwenkachsenkörper nicht entlang der geometrischen Schwenkachse gerade durchläuft, sondern an den Freiräumen gewissermaßen um diese herum einen Abstand von der geometrischen Schwenkachse hält. In anderen Worten weicht der Schwenkachsenkörper gewissermaßen an den Freiräumen der Schwenkachse aus und hält damit die Freiräume frei. Dies kann wiederum in zweierlei Weise geschehen, und zwar einerseits durch den Freiräumen entsprechende Öffnungen durch den Schwenkachsenkörper hindurch, wobei der Schwenkachsenkörper dann gleichzeitig einen Teil der oder die entsprechende Kabelführung bilden kann. Die andere Möglichkeit sind nicht vom Schwenkachsenkörper vollständig umschlossene, sondern offene Freiräume, bei denen der Schwenkachsenkörper vorzugsweise nur seitlich um den Freiraum herumgeführt ist.

Beide Möglichkeiten dieser ersten Variante sind vorteilhaft und haben vor allem auch den schon in Bezug auf den Stand der Technik erwähnten Vorteil eines, wenn gewünscht, durchgehenden (dabei nicht zwingend einstückigen) Schwenkachsenkörpers oder jedenfalls einer sich über die gesamte Länge (in Schwenkachsenrichtung) abstützenden und damit stabilen Ausgestaltung für sich.

Die zweite Variante, gemäß der beanspruchten Erfindung, betrifft eine stattdessen unterbrochene Ausgestaltung des Schwenkachsenkörpers. Dieser ist dementsprechend in eine Mehrzahl Schwenkachsstifte gegliedert, die jeweils nur für die schwenkgelenkige Verbindung zwischen zwei benachbarten Spleißmodulen zuständig sind und durch die entsprechenden Freiräume voneinander getrennt sind. Diese Variante hat den Vorteil, wie im Stand der Technik in Bezug auf Richtungen senkrecht zur geometrischen Schwenkachse schlank ausgeführt werden zu können. Sie ist im Ausführungsbeispiel näher dargestellt.

Natürlich können auch Mischfälle auftreten, bei denen ein Teil der Freiräume in der einen und ein anderer Teil in der anderen Weise gestaltet sind.

Erfindungsgemäß verbinden die genannten Schwenkachsstifte jeweils eine Halteplatte der jeweiligen Spleißmodule miteinander. Schwenkachsstifte außen am Spleißmodulstapel können dementsprechend eine solche Halteplatte mit der Abdeckung oder einem Gehäuseteil verbinden. Die Halteplatten wiederum können zur Stabilisierung des Spleißmodulstapels bei den Schwenkbewegungen beitragen, indem sie mindestens bei einer gewichts- oder belastungsbedingten Auslenkung aneinander entlanggleiten und damit das bewegte Spleißmodul in der Schwenkbewegung sichern oder sogar führen. Das Ausführungsbeispiel zeigt dies in näheren Einzelheiten.

In diesem Sinn ist eine relativ große radiale Erstreckung (radial im Sinn von senkrecht zur geometrischen Schwenkachse) der Halteplatten bevorzugt. Insbesondere können die Halteplatten günstigerweise in zumindest einer solchen radialen Richtung mindestens 10 % der Gesamterstreckung des jeweiligen Spleißmoduls in derselben Richtung ausmachen. Besonders bevorzugterweise gilt dies auch noch für die Untergrenzen 15 % bzw. 20 %. Ferner gelten diese Aussagen vorzugsweise für eine weitere radiale Richtung, die zu der zuerst genannten senkrecht verläuft. Es müssen aber nicht in beiden Fällen die gleichen Untergrenzen bzw. Ausdehnungen vorliegen.

Zusätzlich ist eine nicht zu kleine radiale Erstreckung der Halteplatten ausgehend von der geometrischen Schwenkachse in alle Richtungen bevorzugt, sodass also die geometrische Schwenkachse nicht zu randnah liegt. Beispielsweise kann eine sinnvolle Untergrenze bei 15 %, besser sogar 16 %, 17 % oder sogar 18 % bezogen auf die jeweils entgegengesetzte Richtung liegen. Wenn also die Halteplatten ausgehend von der geometrischen Schwenkachse in einer Richtung eine bestimmte radiale Erstreckung haben, soll in der entgegengesetzten Richtung dementsprechend eine solche Mindesterstreckung existieren. Damit können zu große Scherkräfte auf den Schwenkachsstiften vermieden werden und diese vor allem in Zugrichtung beansprucht werden.

Der Übersichtlichkeit halber wurde die Erfindung bislang anhand mindestens eines LWL-Kabels erklärt, wobei sie grundsätzlich für Spleißmodule mit einer Vielzahl solcher Kabel geeignet und bevorzugt ist. Typischerweise kann eine Reihe von zwölf, vierundzwanzig oder mehr Verbindungselementen an sogenannten "Patchstellen" und eine entsprechende Zahl von Kabeln in einem Schwenkmodul vorgesehen sein. Die Mehrzahl der Verbindungselemente ist dabei im Regelfall in einer linearen Reihe angeordnet und die Verbindungselemente entfernen sich in dieser Reihe zunehmend von der Schwenkachse. Die Reihe ist vorzugsweise ungefähr koplanar mit der Ebene des Schwenkmoduls und der hier beschriebenen Kabelführung durch die Schwenkachse.

Wie schon in dem Stand der Technik EP 2 221 650 A1 dargestellt, ist eine im Wesentlichen rechteckige Grundflächengeometrie der Schwenkmodule mit Anordnung der Schwenkachse in der Nähe einer vorderen Ecke bevorzugt.

Der bei der Aus- und Einschwenkbewegung des Schwenkmoduls überstreichbare Winkel beträgt vorzugsweise mindestens 80° und zunehmend bevorzugt mindestens 85° und 90°. Obergrenzen können hingegen bei 120°, 115° oder 110° liegen. Dieser Winkelbereich muss einerseits bei der Kabelführung in der hier beschriebenen Weise berücksichtigt, andererseits ermöglichen große Ausschwenkwinkel eine gute Zugänglichkeit des Spleißmodulinneren.

Es wurde bereits von der bevorzugten Möglichkeit einer Kabelführung in der Umgebung der geometrischen Schwenkachse geschrieben. Dabei sind Führungswände bevorzugt. Vorzugsweise ist eine dieser Führungswände zum Einlegen von LWL-Kabeln, konkret Patchkabeln, in die Führung ausgelegt und dazu elastisch nachgiebig gestaltet. Sie weist dementsprechend zu einer geeigneten Seite (Seite im Sinn von radialer Richtung, also senkrecht zur geometrischen Schwenkachse), wobei es sich in Bezug auf die Anordnung der Spleißmodule ungefähr um eine Außenseite handeln kann. Eine solche nachgiebige Führungswand kann beim Einlegen von einem LWL-Kabel oder auch einem Finger einer Bedienpersonen oder einem Werkzeug verbogen werden, also verdrängt werden, das Kabel durchlassen, und infolge der elastischen Eigenschaften dann wieder im Wesentlichen in die Ausgangslage zurückkehren. In dieser Weise können das oder die LWL-Kabel einfach und effektiv in die Führung gelegt werden.

Besonders bevorzugterweise handelt es sich um eine Führungswand, die zumindest in ihrem elastisch nachgiebigen Bereich aus einem Elastomerwerkstoff bzw. gummiartigen Werkstoff besteht.

Eine bevorzugte und im Ausführungsbeispiel dargestellte Variante sieht dabei eine solche Wand mit einem z. B. ungefähr mittigen Schlitz (mittig bezüglich der Richtung der geometrischen Schwenkachse) vor. Dieser Schlitz erlaubt dann das elastische Nachgeben der durch den Schlitz geteilten Wandbereiche. Der Schlitz kann vorzugsweise wellenförmig sein, was dazu beiträgt, die Wand bei der elastischen Rückbewegung wieder effektiv zu verschließen.

Generell kann der Schlitz auch im nicht ausgelenkten Zustand der nachgiebigeren Wand im Sinn einer Öffnung bestehen bleiben, wobei er bei einer entsprechenden geometrischen Form, insbesondere der Wellenform, die Kabel dann trotzdem nicht ohne elastische Auslenkung hindurchlässt. Er kann aber auch, was bevorzugt ist, im nicht ausgelenkten Zustand der Wand oder Wandbereiche geschlossen sein, also lediglich eine Mehrteiligkeit der Wand bedeuten und sich erst im Auslenkungszustand öffnen. Letzteres ist beim Ausführungsbeispiel der Fall.

Eine Kabelführung, etwa in der oben beschriebenen Weise, kann sich erfindungsgemäß mit dem jeweiligen Schwenkmodul mitdrehen und z. B. relativ zu den Halteplatten fest realisiert sein, wozu auf das Ausführungsbeispiel verwiesen wird. Dies erlaubt eine besonders einfache und stabile Ausgestaltung.

Wie erwähnt bezieht sich die Erfindung auf eine Mehrzahl Spleißmodule, die in serieller Weise als Stapel realisiert sind, nämlich in Richtung der Schwenkachse gereiht oder gestapelt (also z. B. horizontal oder vertikal). Ferner können die Spleißmodule in solcher Weise gereiht auch in einem an sich bekannten Verteilerschrank untergebracht sein, insbesondere in der beschriebenen Stapelbauform und insbesondere mit einer Mehrzahl Stapel darin. Es kann erneut auf den bereits zitierten Stand der Technik verwiesen werden.

Im Folgenden wird die Erfindung anhand eines Ausführungsbeispiels näher erläutert.

Im Einzelnen zeigt
- Figur 1: eine perspektivische Darstellung eines vereinfachten erfindungsgemäßen Spleißmoduls,
- Figur 2: einen Ausschnitt A aus Figur 1 vergrößert,
- Figur 3: einen schwenkachsennahen Teil des Spleißmoduls aus Figur 1 separat und vergrößert und in einer anderen Blickrichtung,
- Figur 4: den Teil aus Figur 3 mehrfach gestapelt,
- Figur 5: zwei gestapelte Spleißmodule aus Figur 1 in relativ verschwenkter Lage.

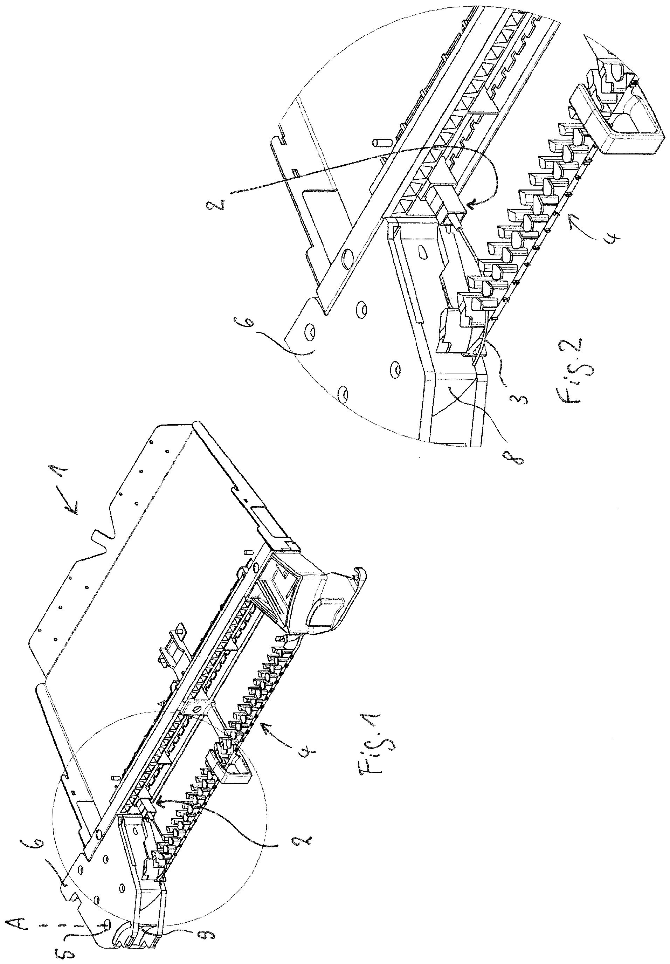

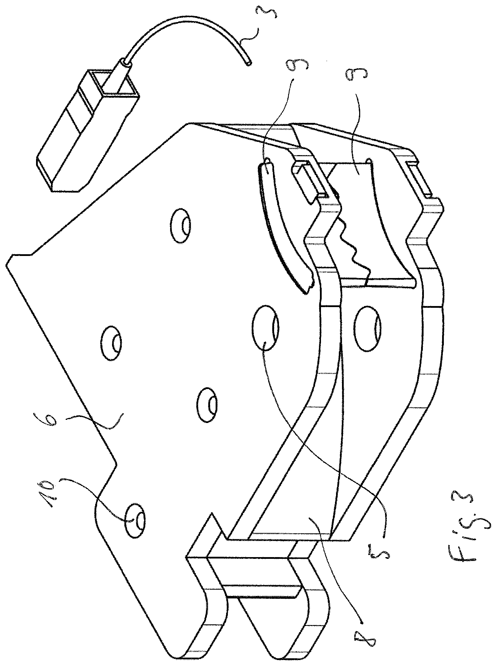

Zunächst wird zum Verständnis des Gesamtzusammenhangs auf die beiden bereits zitierten Dokumente EP 2 221 650 A1 und EP 3 511 753 A1 verwiesen. Insbesondere zeigen die Figuren 1 und 3 in der erstgenannten einen einschlägigen Verteilerschrank mit einer Mehrzahl Spleißmodulstapel und zeigt die Figur 2 dort einen solchen Spleißmodulstapel mit dort rechts vorne liegender Schwenkachse A. In dem zweitgenannten Zitat sieht man den Verteilerschrank in Figur 8 und einen Spleißmodulstapel mit ebenfalls rechts vorne liegender Schwenkachse A in

Figur 7. Figur 6 dort zeigt ein einzelnes schwenkbares Spleißmodul aus dem Stapel mit vorne liegenden steckbaren Patchstellen und dahinter zwei vertikalen Stapeln aus einer Vielzahl Spleißkassetten, die jeweils eine Mehrzahl Spleißstellenablagen enthalten.

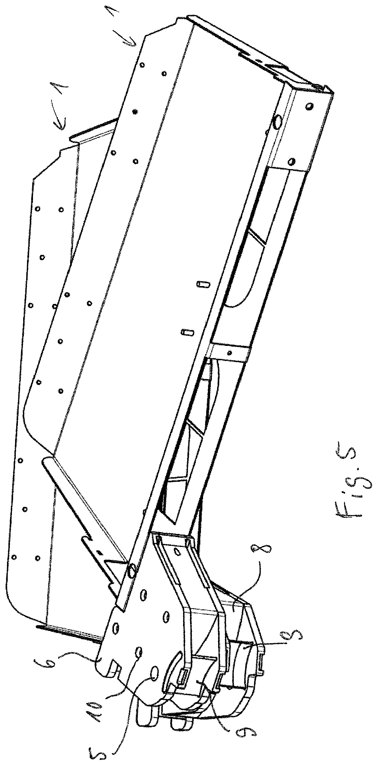

Figur 1 der vorliegenden Anmeldung entspricht weitgehend dieser zuletzt beschriebenen Figur 6, wobei allerdings die Schwenkachse A diesmal links vorne liegt. Das dargestellte Spleißmodul 1 ist zur Vereinfachung ohne Spleißstellenablagen, d. h. ohne die einschlägigen Spleißkassetten gezeigt, die man sich aber analog zu der Figur 6 in der EP 3 511 753 A1 hinzudenken kann. Dieses Spleißmodul 1 ist um die Schwenkachse A schwenkbar, was Figur 5 veranschaulicht. Im weiteren Verlauf wird die Implementierung der Schwenkachse A und der diese umgebenden Bauteile näher beschrieben.

Im Übrigen zeigt Figur 1 (und natürlich auch die Vergrößerung in Figur 2) eine steckbare Patchstelle 2, wobei die Figuren bereits veranschaulichen, dass tatsächlich statt der einen dargestellten Patchstelle 2, 24 (nämlich 4 × 6) davon nebeneinander vorgesehen werden können. Man erkennt ferner, dass ein aus einer solchen steckbaren Patchstelle 2 herausführendes einzelnes LWL-Kabel 3 durch eine den Patchstellen 2 vorgelagerte Reihe 4 von Biegeschutzelementen hindurchgeführt ist und davor dann nach links in Richtung zur Schwenkachse A weiterläuft. Zur Verdeutlichung ist das LWL-Kabel 3 in der Darstellung hier allerdings abgeschnitten, wobei es in der Realität natürlich durch die im Folgenden noch diskutierte Kabelführung hindurch läuft. Auch in Figur 3 ist zur Veranschaulichung ein Stück des Kabels 3 mit dem zugehörigen Steckelement an der Patchstelle 2 mit eingezeichnet.

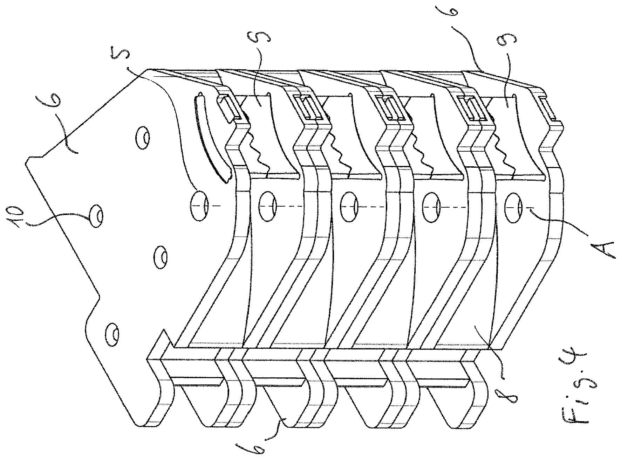

Die geometrische Schwenkachse A läuft vertikal und durchsetzt Löcher 5 in metallischen Plattenelementen 6 (z. B. aus Zinkdruckguss), wobei pro Spleißmodul 1 jeweils ein oberes und ein unteres solches Plattenelement 6 vorgesehen sind, vgl. auch Figur 4 mit dementsprechend acht und Figur 5 mit dementsprechend vier solchen Plattenelementen 6. Die Löcher 5 in den Plattenelementen 6 werden gemäß Figur 4 von separaten Schwenkachsstiften 7 verbunden, und zwar jeweils zwei nächstbenachbarte Plattenelemente 6, die jeweils zu verschiedenen von benachbarten Spleißmodulen 1 gehören. Das dementsprechend oberste und das dementsprechend unterste Plattenelement 6 aus einem Spleißmodulstapel können mit entsprechenden Schwenkachsstiften z. B. mit Gehäuseteilen verbunden werden, wobei ein solches Gehäuse einen solchen Stapel umfasst und schützt, vgl. etwa Figur 7 in der EP 3 511 753 A1 oder Figur 2 in der EP 2 221 650 A1.

Die Schwenkachsstifte können z. B. Schrauben mit einem relativ großen Kopf (insbesondere einem abgeflachten Kopf mit Werkzeugeingriff, etwa Sechskanteingriff) und einer Gegenmutter sein, wobei die Gegenmutter z. B. formschlüssig in einer Einsenkung eines Plattenelements 6 aufgenommen sein kann. Damit kann die Schraube einfach eingedreht werden und muss die Mutter nicht gehalten werden. An dem breiten Schraubenkopf ist vorzugsweise ein Schraubbolzen mit Außengewinde vorgesehen, der wiederum vorzugsweise in ein Innengewinde eines an der Mutter angesetzten Bolzens einzuschrauben ist. Dieser Bolzen der Mutter kann der eigentliche Lagerbolzen sein, also mit den Plattenelementen 6 die Lagerfunktion herstellen. Er kann außerdem zu der Seite des Schraubenkopfes hin mit solcher Toleranz leicht überstehen, dass die Plattenelemente einerseits fest aneinander gehalten werden, andererseits aber auch bei angezogener Schraube drehbeweglich bleiben. Andererseits kann die Toleranz in den radialen Maßen sehr viel kleiner sein, der Lagerbolzen der Mutter also relativ präzise in den Plattenelementen 6 sitzen und diese damit führen.

Damit ist insgesamt ein mehrteiliger Schwenkachsenkörper realisiert, der die in dem zitierten Stand der Technik vorhandenen durchgehenden Achsstifte ersetzt. Dementsprechend entstehen Lücken zwischen den Achsstiften 7, also von der geometrischen Schwenkachse A durchsetzte Unterbrechungen des Schwenkachsenkörpers (der durch das Ensemble der Schwenkachsstifte 7 gebildet ist). In anderen Worten: Zwischen den Plattenelementen 6 ein und desselben Spleißmoduls 1 besteht im Bereich der geometrischen Schwenkachse A und unmittelbar darum herum Platz für die LWL-Kabel 3.

Man kann sich also in Bezug auf Figur 1 vorstellen, dass insgesamt bis zu 24 oder sogar mehr LWL-Kabel 3 als Bündel durch den von der geometrischen Schwenkachse A durchsetzten Bereich zwischen den beiden Plattenelementen 6 hindurch laufen. Dieser Bereich ist ein Führungskanal und in Bezug auf Figur 3, 4 und 5 ungefähr nach vorne und hinten durch Führungswände begrenzt. Eine innere Wand 8 ist dabei eine starre, stabile und durchgehende Wand (insbesondere aus Metall) zwischen den beiden Plattenelementen 6. Eine äußere Wand 9, die also auf der von den Spleißstellen wegweisenden Seite der Schwenkachse A liegt, ist aber elastisch verformbar, besteht nämlich aus einem Elastomer.

Figur 3 zeigt etwas deutlicher, dass diese Führungswand 9 aus einem oberen und einem unteren Element besteht, die jeweils von oben bzw. unten durch Schlitze in den Plattenelementen 6 gesteckt sind und mit einer wellenförmigen Kante ungefähr mittig (hinsichtlich der vertikalen Richtung) aufeinandertreffen. Die beiden Kanten haben dabei eine komplementäre Form und bilden miteinander eine in horizontaler Blickrichtung ungefähr sinusförmige schlitzartige Unterbrechung der Führungswand 9. Dementsprechend muss ein LWL-Kabel 3 nicht der Länge nach durch den Führungskanal zwischen den beiden Führungswänden 8 und 9 hindurch gefädelt werden, sondern kann mit einem geringen Kraftaufwand durch die elastische Elastomerwand 9 hindurchgedrückt werden. Dies gilt in beiden Richtungen, also bei dem Einlegen eines LWL-Kabels 3 in den Führungskanal und umgekehrt bei der Entnahme. Die beiden Teile der Führungswand 9 geben dann nach und schaffen eine entsprechende Öffnung, die nach dem Durchtritt des Kabels durch die elastische Reaktion wieder verschlossen wird.

Sollte dabei nach längerem Gebrauch oder Überlastung keine ganz vollständige Rückführung mehr auftreten, schadet ein etwaiger verbleibender Abstand zwischen den beiden Teilen der Wand 9 insbesondere wegen der wellenförmigen Gestalt des Schlitzes dazwischen nicht, denn die LWL-Kabel sind zu steif, um ohne weiteres durch einen solchen Schlitz zu passen.

Die Figuren veranschaulichen, dass die beiden Plattenelemente 6 durch z. B. vier vertikal verlaufende Schraubverbindungen 10 zusammen und durch die Achsen dieser Schraubverbindungen 10 umgebende Wände (insbesondere hinsichtlich der Führungswand 8) auf Abstand gehalten werden. Die Schraubverbindungsachsen durchsetzen dabei einen nach außen vollständig abgeschlossenen Hohlraum und die abschließenden Wände stabilisieren die gesamte Konstruktion, insbesondere die Planparallelität der beiden Plattenelemente 6. Man könnte statt der Wände auch einen massiven Block benutzen, was aber zusätzliches Gewicht bedeuten würde. Außerdem könnten die in Figur 3 vertikalen Wände zwischen den beiden Plattenelementen 6 mit einem der beiden Plattenelemente integriert ausgeführt sein und könnte dieser integrierte Formkörper mit dem anderen Plattenelement 6 wie dargestellt verschraubt sein. Jedenfalls sind die beiden Plattenelemente 6 besonders stabil miteinander verschraubt und ihrerseits relativ stark ausgeführt.

Damit können Sie anstelle des hier nicht mehr existierenden durchgehenden Achsstabes die jedenfalls beim Ausschwenken eines Spleißmoduls (Figur 5) auftretenden Kippkräfte an den Schwenkachsstiften aufnehmen. Ferner können die Plattenelemente 6 benachbarter Spleißmodule 1 aneinander entlang gleiten, wozu die Schraubverbindungen 10 mit den Plattenelementen 6 bündig realisiert sind. Es handelt sich also gewissermaßen zusätzlich zu dem durch die Löcher 5 und die Schwenkachsstifte 7 realisierten Schwenklagern um Gleitlager für die Schwenkbewegung.

Dementsprechend haben die Plattenelemente 6 eine gewisse horizontale Ausdehnung. Bei diesem Beispiel beträgt diese Ausdehnung in einer horizontalen Querrichtung, also parallel zu der Reihe der Patchstellen 2, ungefähr 21 %, und zwar bezogen auf die gesamte Erstreckung des Spleißmoduls 1 gemäß Figur 1 in dieser Richtung, also insbesondere einschließlich der Plattenelemente 6 selbst (und bezogen auf die Länge der Trägerplatte an der Reihe der Patchstellen, also ohne die Plattenelemente 6 und das dazu spiegelsymmetrische Element etwa 28 %). In der dazu senkrechten Tiefenrichtung betragen diese Werte 34 % in Bezug auf die gesamte Erstreckung des Spleißmoduls 1 aus Figur 1 und 49 %, wenn man den Bereich vor den Patchstellen weglässt. Außerdem erkennt man, dass die geometrische Schwenkachse A auch zu den jeweils entgegengesetzten Seiten deutlich von dem Rand der Plattenelemente 6 entfernt ist, und zwar im Minimalfall etwa 20 % des Abstands zu der entgegengesetzten Seite (in Figur 3 in Bezug auf die Projektion der Blickrichtung auf das Plattenelement 6, also von vorn nach hinten). Damit bieten die Plattenelemente 6 hinsichtlich der auftretenden Hebellängen effektive Gleitflächen.

Im Übrigen zeigen die Figuren, dass sie an ihrem hinteren Bereich (quasi in Fortsetzung der Patchstellenreihe) eine günstige und ausreichend lange Befestigungsmöglichkeit für das restliche Spleißmodul 1 bieten. Insgesamt kann damit trotz der erfindungsgemäßen Modifikation des Schwenkachsenkörpers, also die Unterbrechung in separate Schwenkachsstifte 7, und die damit nur geringen vertikalen Längen dieser einzelnen Stifte eine stabile und zuverlässige Gesamtkonstruktion geschaffen werden.

## Patentansprüche

1. Spleißmodulstapel mit einer Mehrzahl jeweils um eine gemeinsame geometrische Schwenkachse (A) schwenkbarer Lichtwellenleiter-, LWL-, Spleißmodule (1) mit jeweiligen Spleißstellenablagen in den Spleißmodulen (1), welche Spleißmodule (1) entlang der geometrischen Schwenkachse (A) gestapelt sind, wobei ein die Schwenkachse (A) implementierender Schwenkachsenkörper entlang der geometrischen Schwenkachse (A) einen jeweiligen Freiraum für jedes der Spleißmodule (1) aufweist, sodass in der geometrischen Schwenkachse (A) LWL-Kabel (3) aus den Spleißmodulen (1) die Freiräume und die geometrische Schwenkachse (A) durchlaufen können,
**dadurch gekennzeichnet, dass** die Freiräume dadurch implementiert sind, dass der Schwenkachsenkörper in eine Mehrzahl separate Schwenkachsstifte (7) gegliedert ist und diese durch die Freiräume voneinander getrennt sind, welche Schwenkachsstifte (7) zwischen benachbarten Spleißmodulen (1) jeweils eine Halteplatte (6) der jeweiligen Spleißmodule (1) miteinander verbinden.

2. Spleißmodulstapel nach Anspruch 1 mit jeweiligen Führungen (8,9) für jeweils zumindest ein LWL-Kabel (3) aus dem jeweiligen Spleißmodul, welche Führungen (8,9) so ausgelegt sind, dass die LWL-Kabel (3) die gemeinsame geometrische Schwenkachse (A) jeweils durchqueren können.

3. Spleißmodulstapel nach einem der vorstehenden Ansprüche mit einer Abdeckung für zumindest eines der Spleißmodule (1), wobei die Spleißmodule (1) um die Schwenkachse (A) verschwenkt werden können zwischen einer Schließposition, in der die Spleißmodule zumindest zu einer Seite von einem benachbarten Spleißmodul (1), sofern dieses ebenfalls in der Schließposition angeordnet ist, oder von der Abdeckung in einer zu der geometrischen Schwenkachse parallelen Richtung abgedeckt sind, und einer geöffneten Position, in der die Spleißmodule (1) mindestens dann, wenn ein benachbartes Spleißmodul (1) in der Schließposition angeordnet ist, einen Zugang zu der zumindest einen Spleißstellenablage erlauben.

4. Spleißmodulstapel nach Anspruch 1, bei dem die Halteplatten (6) so ausgelegt sind, dass sie bei einer Schwenkbewegung eines der jeweiligen Spleißmodule (1) aneinander entlang gleiten und damit das bewegte Spleißmodul (1) sichern.

5. Spleißmodulstapel nach Anspruch 4, bei dem die Halteplatten (6) in zumindest einer zu der geometrischen Schwenkachse (A) senkrechten Richtung mindestens 10 % der Gesamterstreckung des jeweiligen Spleißmoduls (1) in derselben Richtung ausmachen.

6. Spleißmodulstapel nach einem der vorstehenden Ansprüche mit einer Vielzahl Spleißstellenablagen in jedem Spleißmodul (1), welche Spleißstellenablagen vorzugsweise in einer Mehrzahl Spleißkassetten pro Spleißmodul vorliegen, welche Kassetten vorzugsweise gestapelt angeordnet sind.

7. Spleißmodulstapel nach einem der vorstehenden Ansprüche mit einer jeweiligen Patcheinheit jedes Spleißmoduls (1), welche Patcheinheiten jeweils eine Vielzahl Patchstellen (2) mit jeweils einer lösbaren Verbindungseinrichtung für ein jeweiliges LWL-Kabel (3) aufweisen.

8. Spleißmodulstapel nach einem der vorstehenden Ansprüche, mindestens nach Anspruch 2, bei dem die Führungen (8, 9) jeweils eine elastisch nachgiebige Wand (9) zu einer senkrecht von der geometrischen Schwenkachse (A) wegweisenden Seite aufweisen, welche Wand (9) so ausgelegt ist, dass ein LWL-Kabel (3) bei einem Einlegen in die Führung (8, 9) die Wand (9) im Sinn ihrer Nachgiebigkeit verdrängt, um dann durch die elastisch rückgeführte Wand (9) in der Führung (8, 9) gehalten zu werden.

9. Spleißmodulstapel nach Anspruch 8, bei dem die Wand (9) mindestens in einem nachgiebigen Bereich aus Elastomermaterial besteht.

10. Spleißmodulstapel nach Anspruch 8 oder 9, bei dem die Wand (9) geschlitzt ist und zwei durch den Schlitz getrennte Teile der Wand (9) elastisch nachgiebig sind.

11. Spleißmodulstapel nach Anspruch 10, bei dem der Schlitz mäandrierend verläuft.

12. Verteilerschrank mit einer Mehrzahl Spleißmodulstapel nach einem der vorstehenden Ansprüche, deren geometrische Schwenkachsen (A) übereinstimmen und die in dieser Richtung gereiht oder gestapelt sind.

## Claims

1. Splice module stack having a plurality of optical waveguide, fibre optic splice modules (1) each pivotable about a common geometric pivot axis (A) with respective splice point receivers in the splice modules (1), which splice modules (1) are stacked along the geometric pivot axis (A), wherein a pivot axis body implementing the pivot axis (A) has a respective clearance for each of the splice modules (1) along the geometric pivot axis (A) so that in the geometric pivot axis (A) fibre optic cables (3) from the splice modules (1) can pass through the clearances and the geometric pivot axis (A),
**characterised in that** the clearances are implemented **in that** the pivot axis body is divided into a plurality of separate pivot axis pins (7) and these are separated from each other by the clearances, which pivot axis pins (7) between adjacent splice modules (1) each connect a retaining plate (6) of the respective splice modules (1) to each other.

2. Splice module stack according to claim 1 having respective guides (8, 9) for at least one respective fibre optic cable (3) from the respective splice module, which guides (8, 9) are designed such that the fibre optic cables (3) can in each case traverse the common geometric pivot axis (A).

3. Splice module stack according to one of the preceding claims with a cover for at least one of the splice modules (1), wherein the splice modules (1) can be pivoted about the pivot axis (A) between a closed position, in which the splice modules are covered on at least one side by an adjacent splice module (1), provided this is also arranged in the closed position, or by the cover in a direction parallel to the geometric pivot axis, and an open position in which the splice modules (1) allow access to the at least one splice point receiver at least when an adjacent splice module (1) is arranged in the closed position.

4. Splice module stack according to claim 1, wherein the retaining plates (6) are designed to slide along each other during a pivoting movement of one respective of the splice modules (1), thereby securing the moving splice module (1).

5. Splice module stack according to claim 4, wherein the retaining plates (6) in at least one direction perpendicular to the geometric pivot axis (A) account for at least 10% of the total extension of the respective splice module (1) in the same direction.

6. Splice module stack according to one of the preceding claims comprising a plurality of splice point receivers in each splice module (1), said splice point receivers preferably being in a plurality of splice cassettes per splice module, said cassettes preferably being stacked.

7. Splice module stack according to one of the preceding claims, comprising a respective patch unit of each splice module (1), which patch units each comprise a plurality of patch locations (2) each having a releasable connection device for a respective fibre optic cable (3).

8. Splice module stack according to one of the preceding claims, at least according to claim 2, in which the guides (8, 9) each have an elastically compliant wall (9) on a side facing away perpendicularly from the geometric pivot axis (A), which wall (9) is designed such that a fibre optic cable (3), when inserted into the guide (8, 9), displaces the wall (9) in the sense of its resilience, in order then to be held in the guide (8, 9) by the elastically reacting wall (9).

9. Splice module stack according to claim 8, in which the wall (9) consists of elastomer material at least in a compliant region.

10. Splice module stack according to claim 8 or 9, wherein the wall (9) is slotted and two parts of the wall (9) separated by the slot are elastically compliant.

11. Splice module stack according to claim 10, wherein the slot is meandering.

12. Distribution cabinet with a plurality of splice module stacks according to one of the preceding claims, whose geometric pivot axes (A) coincide and which are lined up or stacked in this direction.

## Revendications

1. Empilement de modules d'épissure comprenant une multiplicité de modules d'épissure pour câbles à fibre optique (1) qui pivotent chacun sur un axe de pivotement géométrique (A) commun et comportent des éléments récepteurs de points d'épissure respectifs situés à l'intérieur des modules d'épissure (1), lesquels modules d'épissure (1) sont empilés dans la direction de l'axe de pivotement géométrique (A), un corps d'axe de pivotement réalisant ledit axe de pivotement (A) présentant, dans le sens de l'axe de pivotement géométrique (A), un espace respectivement destiné à chacun des modules d'épissure (1), si bien que, dans l'axe de pivotement géométrique (A), des câbles à fibre optique (3) sortant des modules d'épissure (1) peuvent traverser lesdits espaces et ledit axe de pivotement géométrique (A),
**caractérisé en ce que** les espaces sont réalisés moyennant une division du corps d'axe de pivotement en une multiplicité de tiges d'axe de pivotement (7) distinctes et séparées les unes des autres par lesdits espaces, lesdites tiges d'axe de pivotement (7) reliant chacune, entre deux modules d'épissure (1) voisins, une plaque de support (6) de chacun des modules d'épissure (1) à l'autre.

2. Empilement de modules d'épissure selon la revendication 1, comportant des organes de guidage (8, 9) respectifs pour au moins un câble à fibre optique (3) respectif sortant de son module d'épissure, lesquels organes de guidage (8, 9) sont conçus de façon que chacun des câbles à fibre optique (3) peut traverser l'axe de pivotement géométrique (A) commun.

3. Empilement de modules d'épissure selon l'une des revendications précédentes, comportant un couvercle pour au moins l'un des modules d'épissure (1), lesdits modules d'épissure (1) pouvant pivoter sur l'axe de pivotement (A) entre une position de fermeture, dans laquelle les modules d'épissure sont recouverts, au moins sur un côté, par un module d'épissure (1) voisin, dans la mesure où celui-ci se trouve également en position de fermeture, ou par ledit couvercle, dans une direction parallèle à l'axe de pivotement géométrique, et une position ouverte dans laquelle les modules d'épissure (1), au moins lorsqu'un module d'épissure (1) voisin se trouve en position de fermeture, permettent d'accéder à l'au moins un élément récepteur de point d'épissure.

4. Empilement de modules d'épissure selon la revendication 1, dans lequel les plaques de support (6) sont conçues de façon à coulisser l'une contre l'autre lors du pivotement d'un des modules d'épissure (1) respectifs et à ainsi consolider le module d'épissure (1) en pivotement.

5. Empilement de modules d'épissure selon la revendication 4, dans lequel, dans au moins une direction perpendiculaire à l'axe de pivotement géométrique (A), les plaques de support (6) font au moins 10 % de l'étendue totale du module d'épissure (1) respectif dans la même direction.

6. Empilement de modules d'épissure selon l'une des revendications précédentes, comportant une pluralité d'éléments récepteurs de points d'épissure dans chaque module d'épissure (1), lesquels éléments récepteurs de points d'épissure se présentent de préférence dans une multiplicité de cassettes d'épissure par module d'épissure, lesquelles cassettes sont de préférence empilées.

7. Empilement de modules d'épissure selon l'une des revendications précédentes, comportant un ensemble de raccordement respectif de chaque module d'épissure (1), lesquels ensembles de raccordement présentent respectivement une pluralité de points de raccordement (2) comportant chacun un dispositif de connexion détachable pour un câble à fibre optique (3) respectif.

8. Empilement de modules d'épissure selon l'une des revendications précédentes, au moins selon la revendication 2, dans lequel les organes de guidage (8, 9) présentent chacun une paroi (9) élastiquement flexible sur un côté perpendiculairement écarté de l'axe de pivotement géométrique (A), laquelle paroi (9) est conçue de façon qu'un câble à fibre optique (3) posé dans l'organe de guidage (8, 9) repousse la paroi (9) en vertu de son élasticité pour être alors retenu, par ladite paroi (9) élastiquement asservie, dans ledit organe de guidage (8, 9).

9. Empilement de modules d'épissure selon la revendication 8, dans lequel la paroi (9) se compose, au moins dans une zone élastique, d'un matériau élastomère.

10. Empilement de modules d'épissure selon la revendication 8 ou 9, dans lequel la paroi (9) est fendue et deux parties de la paroi (9) séparées par ladite fente sont élastiquement flexibles.

11. Empilement de modules d'épissure selon la revendication 10, dans lequel la fente est à méandres.

12. Armoire de distribution comprenant une multiplicité d'empilements de modules d'épissure selon l'une des revendications précédentes, dont les axes de pivotement géométriques (A) sont en concordance et qui sont mis en rangée ou en pile dans cette direction.
